# FASCICULE DE BREVET EUROPEEN

(11) **EP 2 693 872 B1**
(45) Date de publication et mention de la délivrance du brevet: **29.05.2019**
(21) Numéro de dépôt: 12719293.8
(22) Date de dépôt: 03.04.2012
(51) Int. Cl.: H04W 4/16, A01M 23/00, A01M 23/08, A01M 31/00

(54) **MÉTHODE ET SYSTÈME DE CONTRÔLE ET DE COMMUNICATION DES STATUTS DE POSTES D'APPATAGE DE NUISIBLES**
VERFAHREN UND SYSTEM ZUR ÜBERWACHUNG UND MITTEILUNG DES ZUSTANDS VON FALLEN FÜR UNGEZIEFER ODER SCHÄDLINGE
METHOD AND SYSTEM FOR MONITORING AND COMMUNICATING THE STATUS OF TRAPS FOR VERMIN OR PESTS

(30) Priorité: 05.04.2011 BE 201100201
(43) Date de publication de la demande: 12.02.2014
(73) Titulaire: Transport Data Publications sprl, 1060 Bruxelles (BE)
(72) Inventeur: Frojmovics, Abraham, 1180 Bruxelles (BE)
(74) Mandataire: Colens, Alain M.G.M.
(86) Numéro de dépôt international: PCT/EP2012/056053
(87) Numéro de publication internationale: WO 2012/136647

(56) Documents cités:
- WO-A2-2008/035304
- DE-U1-202004 013 928

## Description

### Domaine de l'invention

L'invention concerne un système, et une méthode de contrôle et de communication de postes d'appâtage de nuisibles, tels des rongeurs.

Il est nécessaire d'inspecter régulièrement l'état des appâts disposés à différents endroits à l'intérieur ou à l'extérieur d'un bâtiment afin de contrôler si des nuisibles y ont touchés et les remplacer, si nécessaire. L'état de l'inspection ainsi que la communication des résultats doit être assurée, afin de pouvoir prendre les mesures nécessaires, tels que le réapprovisionnement des appâts ainsi que l'enlèvement et l'élimination du nuisible.

### Etat de la technique

A ces fins, on connaît dans l'état de la technique l'utilisation de modules de télécommunication qui sont installés sur les postes d'appâtage. Les divers postes communiquent par le biais d'un ou plusieurs appareils de télécommunication centralisés se situant à une certaine proximité des appâts avec un serveur informatique, qui relaie les informations pertinentes vers les utilisateurs. La communication vers le serveur est effectuée par le biais de lignes téléphoniques fixes ou par GSM.

A titre d'exemple le document WO 2008/035304 A2 divulgue un poste d'appâtage muni d'un module de télécommunication de téléphonie mobile autonome.

Un premier désavantage est la nécessité de mettre en place un réseau de télécommunication, afin de s'assurer que tous les appâts pourront communiquer les données vers un mode de télécommunication qui transmet les données de tous les appâts concernés vers le serveur.

Ce réseau de communication nécessite une source d'énergie qui n'est pas toujours disponible dans les endroits où ces pièges sont déployés.

De plus, le réseau de communication nécessite parfois une connexion à l'internet, ce qui n'est pas toujours disponible.

Un second problème est la mise en réseau des divers pièges déployés dans le lieu, par exemple l'immeuble à surveiller. L'inter connectivité des pièges doit se faire, soit par le biais de câbles, soit par le biais d'un système de communication sans fil. Dans le premier cas, les fils peuvent être dérangeants à l'activité réalisée dans le lieu ou l'immeuble à surveiller. Dans le second cas, les pièges doivent se trouver en deçà d'une distance maximale, sinon la communication n'est pas possible.

Un troisième problème est l'absence d'accords d'interconnexion GPRS (Internet mobile) entre certains opérateurs, ce qui réduit considérablement la qualité des communications, en cas d'absence d'un réseau partenaire.

Certains pièges sont munis d'un système d'entrée à sens-unique, par exemple via des balancelles, mais ce système n'est pas utilisé pour signaler le passage d'un nuisible.

Enfin, les senseurs électroniques pour nuisibles sont souvent en contact direct avec ceux-ci, pouvant entraîner leur détérioration.

### Résumé de l'invention

Un but de l'invention est de proposer un système afin de contrôler si un nuisible ou tout autre animal s'est introduit dans un poste d'appâtage et pour informer l'utilisateur de cet événement en temps réel.

A cette fin, dans le système selon la revendication 1 le poste d'appâtage comprend un module de télécommunication de téléphonie mobile autonome, ainsi qu'une carte de circuit imprimé, comportant entre autres une mémoire et un processeur, un dispositif de contrôle du poste d'appâtage permet la réalisation des étapes suivantes: une étape de détection lorsque le nuisible s'introduit dans le poste d'appâtage, une étape de communication de cet état vers un serveur, par le biais d'un appel en absence vers un serveur ; une étape de déchiffrage du message qui inclut le numéro d'appel du module de communication ainsi que du numéro de téléphone de l'appelé, relié au serveur ; et une étape de déclenchement d'un événement d'alerte par lequel un objet ou une personne est contacté par télécommunication, afin de signaler la capture du nuisible.

D'autres aspects de l'invention sont décrits dans les revendications 2 à 14 annexées.

Une cassette contenant la partie électronique du poste d'appâtage est décrite dans la revendication 15.

Une méthode de contrôle et de gestion d'une pluralité de postes d'appâtage est décrite dans la revendication 16.

Le système selon l'invention permet l'utilisation d'un moyen de communication téléphonique gratuit, grâce au recours à un "appel en absence". En effet, du côté du poste appelé, c'est-à-dire le modem connecté au serveur, ou un numéro de téléphone virtuel, la communication est rejetée par le serveur après que celui-ci ait enregistré le numéro d'appel.

La communication de téléphonie mobile est réalisable dans le monde entier, étant donné que les opérateurs utilisés ont des accords d'accès avec les réseaux de téléphonie mobile de pratiquement tous les pays du monde.

Le système selon l'invention offre une autonomie importante au niveau énergétique, par l'utilisation de batteries longue durée par exemple de type lithium, soit de batteries rechargeables, soit de super condensateurs rechargeables par des moyens mécaniques.

Le traitement des informations consiste à effectuer un lien entre le numéro de téléphone mobile du piège appelant avec le téléphone mobile relié au serveur. Le serveur interprète la conjugaison de ces deux numéros de téléphones mobiles, afin de pouvoir donner une interprétation de celle-ci. Ces numéros peuvent être supportés par des cartes dites cartes SIM présentant une identification unique, non ambigue et valable à l'échelle mondiale. Chaque couple de numéros reçus par le serveur est interprété, et indique un changement dans le statut du piège.

Le serveur est muni d'un ou plusieurs numéros de téléphone mobiles différents ou de numéros virtuels, afin de permettre la réception et l'interprétation de couples de numéros différents, au départ d'au moins un piège muni du système comprenant un modem de téléphonie mobile, d'une carte circuit imprimé, un processeur ainsi qu'un support de mémoire.

Sur le serveur, un dispositif interprète les contenus des transmissions en provenance des appâts.

Le système permet la détection de capture d'un animal nuisible, tel que souris, rat, mulot, ou tout autre nuisible, lorsque le nuisible s'introduit dans le poste d'appatâge.

Le système permet également la détection de capture d'un animal sauvage ou non, tel que renard, belette, chien viverrin, fouine, lapin de garenne, martre, putois, ragondin, rat musqué, raton laveur, sanglier, vison d'Amérique, ou tout autre animal sauvage, lorsque l'animal sauvage s'introduit dans le poste d'appâtage indépendant.

Un logiciel interprète et gère les signaux enregistrés, tels que la capture d'un nuisible, d'une indication de charge minimale de la batterie et tout autre paramètre enregistré et transmet ceux-ci au modem pour sa retransmission au serveur. Selon un mode de réalisation, on prévoit l'enregistrement de l'intrusion du nuisible, par le passage d'un aimant apposé au système de capture du nuisible, devant un détecteur de proximité.

Le système concerne aussi le mode d'enclenchement de l'appareil, par exemple par l'éloignement d'un aimant sur la partie externe du boîtier électronique de l'appareil, derrière lequel se trouve un commutateur électromagnétique comme par exemple de type REED..

### Brève description des figures

Ces aspects ainsi que d'autres aspects de l'invention seront clarifiés dans la description qui suit de modes de réalisation particuliers de l'invention, référence étant faite aux figures schématiques annexées, dans lesquelles :
la Fig. 1 montre un schéma général illustrant un système selon l'invention
la Fig. 2 montre très schématiquement un poste d'appâtage placé dans un coin d'une pièce illustrant tous les éléments, tels que la ballancelle 23, le bras 24 ainsi que l'aimant 25. Ce dernier enclenche le commutateur par exemple de type REED 28, en passant devant celui-ci, lorsque le poids du rongeur fait basculer la balancelle.
la Fig. 3 illustre la cassette, faisant partie du poste d'appâtage et contenant tous les composants électroniques du poste d'appâtage
la Fig. 4 montre le détail schématique d'une réalisation particulière qui utilise le passage à côté ou par une porte d'accès à un poste d'appâtage.

### Description détaillée de modes de réalisations particuliers.

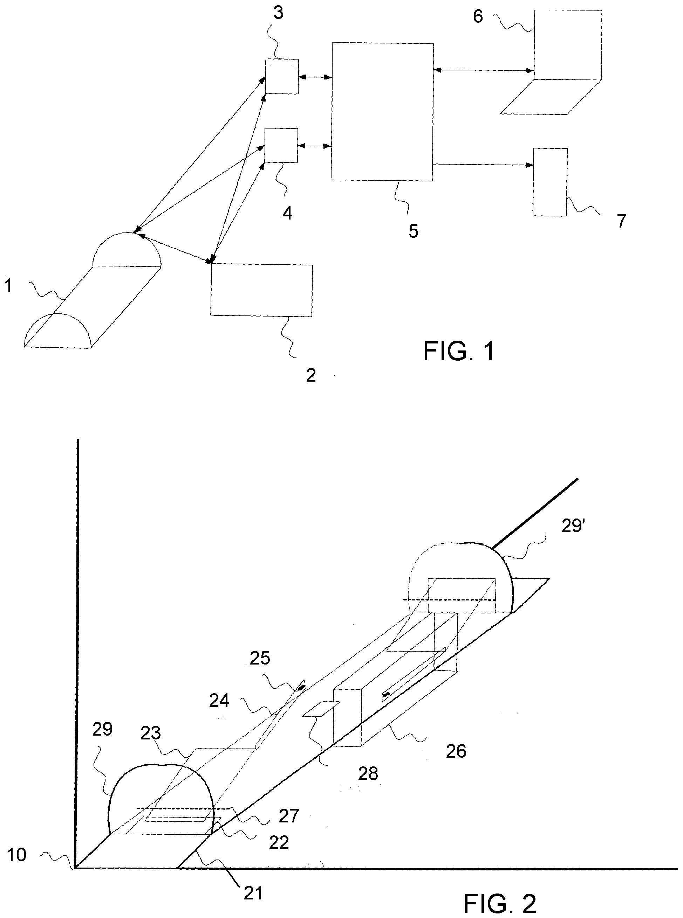

La figure 1. représente un schéma général sous forme de bloc diagramme d'une réalisation particulière du système selon l'invention. Ce schéma illustre les éléments principaux de l'invention : on distingue le poste d'appâtage 1, la cassette 2 comportant le PCB (circuit imprimé), le modem, l'antenne, la carte SIM, la batterie ainsi que le commutateur, le(s) modem(s) 3 du serveur et le/ les numéros virtuels 4. On illustre aussi un serveur 5, un PC 6 avec affichage éventuel et un téléphone mobile 7.

En se référant à la fig. 2, on illustre un poste d'appâtage 21 muni d'au moins deux tunnels avec ouvertures 29, 29' contenant des balancelles 23 qui pivotent verticalement de part et d'autre d'un axe 27. L'entrée de chaque tunnel est munie d'une plateforme 21 qui permet au poste d'appâtage d'être posé contre un coin 10 d'une pièce tout en offrant la possibilité au nuisible de s'introduire aisément dans les tunnels d'entrée 29.

Cette plateforme assure l'accessibilité au poste d'appâtage au nuisible, au cas ou ce dernier serait déplacé par inadvertance contre un coin de la pièce, bloquant ainsi l'accès vers au moins un accès au tunnel d'entrée.

Par défaut, la balancelle est en position basse, du côté de l'entrée, permettant l'accès du nuisible au poste d'appâtage.

Chaque balancelle est pourvue d'un bras 24 lui-même pourvu d'un aimant 25. L'entrée de chaque tunnel est munie d'un clapet de non retour 22 qui interdit toute sortie du nuisible, lorsqu'il dépasse l'axe du plan incliné. La balancelle provoque la fermeture du clapet, lorsque la partie de la balancelle, se trouvant du côté de l'entrée du tunnel 29 est en position haute.

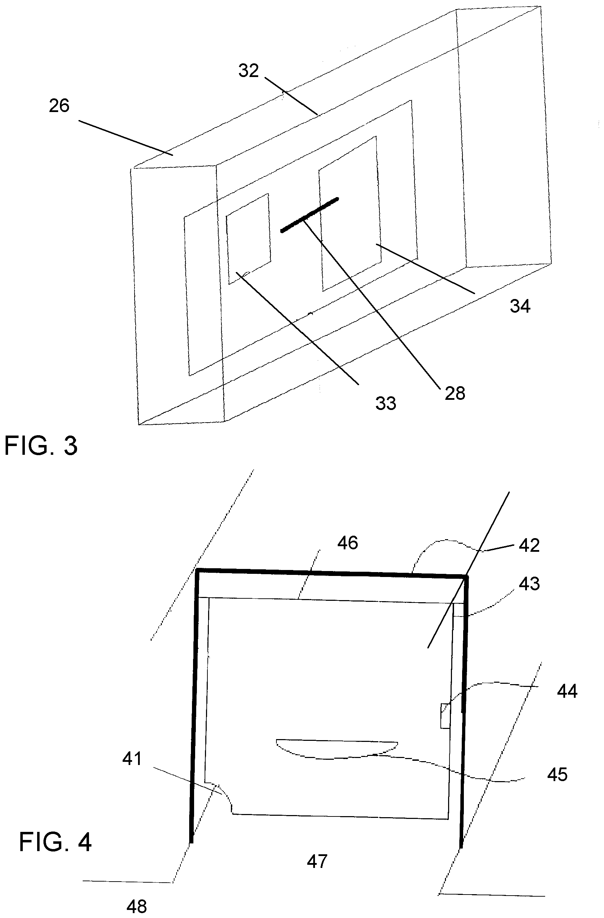

En se référant à la Fig. 3 également, lorsque le nuisible s'introduit dans l'un ou dans l'autre tunnel et dépasse l'axe de la balancelle, le bras 24 passe devant l'interrupteur détecteur d'aimant de type « Reed » 28, qui se trouve à l'intérieur de la cassette 26 contenant la partie électronique du poste d'appâtage et déclenche l'appel vers le serveur. La partie électronique est alimentée par une pile 33 longue durée . Le détecteur d'aimant de type Reed 28 est logé à l'intérieur de la cassette contenant la partie électronique, ainsi le nuisible n'a aucune possibilité de ronger et d'abimer les composants sensibles du système. La cassette reste totalement autonome de la partie mécanique et permet un changement rapide, par un système de glissière verticale.

L'élément d'excitation du détecteur de proximité, inséré dans le bras 25 peut également être un aimant, lorsque le détecteur de proximité est un interrupteur magnétique 28. de type Reed.

L'élément d'excitation inséré dans le bras 25 peut également être une source de chaleur lorsque le détecteur de proximité est un détecteur de type infra rouge. L'élément d'excitation inséré dans le bras 25 peut également être la chaleur corporelle du nuisible, lorsque le détecteur de proximité est un détecteur de type infra rouge.

L'élément d'excitation peut également être inséré dans une porte d'accès. La Fig. 4. illustre une telle mise en oeuvre .

Dans cette réalisation particulière, la porte d'accès 43 est suspendue à un cadre 42, qui pivote librement sur un axe horizontal 46 solidaire à la partie supérieure de la porte.

Lorsque le rongeur passe dans le couloir 47 il heurte ou soit pousse la porte dans son cheminement vers l'appât se trouvant derrière ladite porte qui est de préférence réalisée en matière transparente ou translucide. L'aimant 44 apposé passe alors devant l'interrupteur 28 de type Reed . Lorsque le rongeur désire ressortir du couloir 47 il peut emprunter le trou 41 dans la porte 43 au cas où la porte ne bascule que dans la direction de l'appât.

Lorsque le rongeur passe dans le couloir 48 il pousse de par son gabarit la plateforme 45 apposée horizontalement sur la porte 43. Ce mouvement déclenche un balancement de la porte selon l'axe horizontal 46, qui enclanche à son tour le passage de l'aimant 44 devant l'interrupteur de type REED 28.

Le modem se trouvant à l'intérieur de la cassette contenant l'électronique est muni d'une carte à circuit imprimé 32 dont le logiciel gère les divers signaux d'alarme et transmet les données à envoyer par téléphonie mobile, vers le serveur. Les signaux d'alarme peuvent parvenir du détecteur de proximité, mais aussi d'un capteur indiquant l'état de charge minimale de la batterie 33 .

Le logiciel qui est embarqué sur la carte à circuit imprimé sauvegarde le numéro de référence du capteur sur le support de mémoire. Divers numéros de références, comme celui du détecteur de proximité, mais aussi le capteur indiquant la charge minimale de la pile au lithium ou toute autre pile ou batterie, nécessaire à faire fonctionner le système, peuvent être sauvegardés. Lors d'une intrusion d'un nuisible, le logiciel embarqué enregistre le signal d'alarme qui comporte un numéro de référence. De la même manière, lorsque la charge minimale de la batterie atteint un seuil inférieur, le logiciel embarqué enregistre un numéro de référence.

Chaque numéro de référence correspond à un numéro de téléphone à appeler en absence. Tous les numéros de téléphones à appeler sont préenregistrés sur la carte SIM de chaque modem, se trouvant dans le piège.

Le modem dans le poste d'appâtage effectue un appel en absence vers le modem ad-hoc contenant une carte SIM, relié au serveur. Le modem peut également effectuer un appel en absence vers un numéro de téléphone virtuel relié au serveur.

Lorsqu'un appel est reçu par un des modems, ou un des numéros de téléphone virtuels, qui sont connectés au serveur, une application informatique sur le serveur enregistre le numéro d'appel, qui est communiqué lors de l'établissement de la connexion téléphonique et interrompt l'appel. Il n'y a pas de transfert de voix, ni de données.

Le couple, comprenant le numéro d'origine de l'appel, ainsi que le numéro de destination de l'appel, ce dernier étant le numéro de téléphone du modem de destination, ou du numéro de téléphone virtuel de destination, est comparé par le logiciel se trouvant sur le serveur, à une base de données résidente.

La base de données est composée de couples de numéros de téléphone, étant un numéro d'appel et un numéro de destination. Chaque couple de numéros, indique ainsi un poste d'appâtage, par le numéro de téléphone appelant et un événement qui y est lié, indiqué par le numéro de téléphone appelé. La base de données résidente dans le serveur est composée au fur et à mesure qu'on ajoute des postes d'appâtage au système.

Une liste d'action est prédéfinie par l'utilisateur et introduite dans le serveur par un outil informatique via internet, comme par exemple un browser. Après la réception et l'interprétation d'un couple de numéros, une ou plusieurs démarches informatiques sont automatiquement entreprises par le serveur.

Ces démarches comportent l'envoi de certains messages courriel et de messages SMS, prédéfinis par l'utilisateur vers les ordinateurs 6 et /ou appareils de téléphonies mobiles 7 des utilisateurs. Le logiciel internet comporte également une interface graphique utilisateur, qui permet de visualiser sur un plan, le piège qui a déclenché l'alerte, avec une indication de la date, l'heure, ainsi que la nature de l'alerte.

Le logiciel internet permet également la gestion des utilisateurs, des postes d'appâtage, des autres appareils, tels que des ouvres-portes, ouvre-portails, interrupteurs de luminaires.

Les actions peuvent également comporter un déclenchement d'un appel téléphonique en absence vers un appareil muni d'un modem ainsi que d'une carte à circuit imprimé, un processeur et comportant un support mémoire. Cet objet peut être par exemple un piège à souris, rat, ou tout autre nuisible.

A la réception de l'appel en absence, le processeur compare le couple de numéros de téléphone de l'appareil appelant, ainsi que du modem recevant l'appel et le compare à une liste de messages, se trouvant sauvegardé en mémoire sur la carte à circuit imprimé. Ce message déclenche à son tour une action, tel que la fermeture des accès au piège, l'ajout de nourriture etc...

Dans une réalisation particulière, la cassette comportant l'appareillage électronique du poste d'appâtage est indépendante du piège. Ceci peut-être le cas de pièges pour de plus grands animaux que les nuisibles, qui sont trop grands pour pouvoir entrer dans le piège à nuisibles, tel que décrit dans la Fig. 1.

Dans ce dernier cas, le déclenchement de l'alerte peut se faire par le biais d'un câble ou d'une corde dont une extrémité est connectée magnétiquement à la cassette contenant l'appareillage électronique, l'autre extrémité étant connectée à la porte d'entrée du piège. Lorsque l'animal s'introduit dans le piège, l'ouverture, ou la fermeture de la porte de ce dernier provoque une traction sur la corde. Cette traction retire l'aimant de la cassette électronique. Dans cette dernière réalisation particulière, l'action d'éloignement de l'aimant de la cassette et en conséquence du commutateur se trouvant à l'intérieur de la cassette provoque le déclenchement d'une alerte.

Dans une réalisation particulière, ces actions de déclenchement d'appels et de réceptions d'appel, suivies d'une interprétation du couple comprenant le numéro de téléphone appelant et du numéro de téléphone appelé, peut être reproduit à l'infini, c'est à dire des objets, appelants d'autres objets ou des postes d'appâtages et effectuant des manoeuvres particulières.

Dans une réalisation particulière, le serveur envoie un message courriel via Internet pour informer l'utilisateur de l'alerte en cas d'intrusion d'un nuisible dans un poste d'appâtage.

Dans une réalisation particulière, le serveur envoie un message SMS pour informer l'utilisateur de l'alerte en cas d'intrusion d'un nuisible dans un poste d'appâtage. Dans une réalisation particulière, le serveur envoie un message courriel via Internet pour informer l'utilisateur d'un envoi d'une commande vers un poste d'appâtage.

Dans une réalisation particulière, le serveur envoie un message SMS pour informer l'utilisateur d'un envoi d'une commande vers un poste d'appâtage .

Dans une réalisation particulière, le serveur envoie un message courriel via Internet pour informer l'utilisateur d'un envoi d'une commande vers un autre appareil.

Dans une réalisation particulière, le serveur envoie un message SMS pour informer l'utilisateur d'un envoi d'une commande vers un autre appareil.

Le système permet le contrôle de poste d'appâtage comportant plusieurs appareils munis d'un modem, un processeur, d'une carte à circuit imprimé, avec un support mémoire, qui comporte ou est relié à un ou plusieurs capteurs ou détecteurs, le signal de chaque capteur étant interprété et dirigé sous forme d'au moins un appel en absence vers un serveur comportant au moins un numéro d'appel , le logiciel dudit serveur interprétant l'origine et la nature du signal sur base du ou des couples de numéros d'appels du numéro appelant et du numéro appelé. Le serveur peut alors en fonction de cette interprétation, appeler lesdits ou d'autres appareils , toujours de préférence sous la forme d'appel en absence, pour donner des instructions adéquates en fonction d'un logiciel défini.

## Revendications

1. Système comprenant au moins un poste (1) d'appâtage pour animaux, en particulier pour nuisibles et pour animaux sauvages, et un dispositif pour le contrôle dudit au moins un poste d'appâtage, ledit au moins un poste d'appâtage étant muni d'un module de télécommunication de téléphonie mobile autonome ou modem, ainsi que d'une carte circuit imprimé, comportant entre autres une mémoire et un processeur, le dispositif de contrôle permettant la réalisation des étapes suivantes:
- une étape de détection lorsqu'un évènement ou état se produit;
- une étape de communication de cet état vers un serveur (5), par le biais d'un appel en absence vers ce serveur à un numéro déterminé;
- au niveau du serveur, une étape de déchiffrage de l'état qui inclut le numéro d'appel du module de communication ainsi que du numéro de téléphone de l'appelé, relié au serveur ;
- et une étape de déclenchement d'un événement d'alerte par lequel un objet ou une personne est contactée par le serveur, de préférence par télécommunication, afin de signaler ledit état ou évènement.

2. Système selon la revendication 1 dans lequel l'étape de détection se produit lorsque le nuisible s'introduit dans le poste (1) d'appâtage.

3. Système selon la revendication 1 ou 2 dans lequel le numéro de l'appel en absence vers le serveur dépend dudit état ou évènement.

4. Système selon la revendication 1, 2 ou 3 dans lequel l'étape de détection se produit lorsque l'état de charge de la batterie (33) se situe sous un niveau déterminé.

5. Système selon la revendication 1 dans lequel l'étape de déchiffrage ou d'interprétation de l'appel en absence, se base sur le numéro d'appel du modem appelant, et le numéro d'appel du modem appelé, ou d'un numéro virtuel, le couple de ces deux numéros indiquant l'origine de l'appel, ainsi que la nature de l'alerte, la nature de l'appel étant indiquée par le numéro appelé en absence.

6. Système selon la revendication 1 dans lequel le au moins un poste d'appâtage (1) comprend au moins un boîtier de dimension adaptée audit nuisible et présentant au moins une ouverture (29, 29') et un clapet (22) de non-retour qui empêche tout retour du nuisible par ladite au moins une ouverture et comprenant un élément d'excitation d'un détecteur de proximité (25).

7. Système selon n'importe laquelle des revendications précédentes dans lequel le dispositif de contrôle permet la réalisation d'une étape d'enregistrement de l'alerte consécutive à ladite détection sur le support mémoire de la carte à circuit imprimé.

8. Système selon n'importe laquelle des revendications précédentes dans lequel le au moins un poste d'appâtage, suite à une interprétation d'un appel en absence en provenance du serveur, effectue une certaine manoeuvre.

9. Système selon n'importe laquelle des revendications précédentes dans lequel le serveur contacte une ou plusieurs personnes par courriel ou SMS.

10. Système selon n'importe laquelle des revendications précédentes dans lequel l'étape de détection est effectuée à l'aide d'un interrupteur de type Reed et un aimant, ou à l'aide d'un interrupteur magnétique et un aimant ou à l'aide d'un interrupteur à infrarouge et une source de chaleur, ou par l'ouverture d'une porte d'accès vers ou dans le poste d'appâtage par le nuisible, l'élément d'excitation du détecteur de proximité, intégré dans la porte passant à proximité du détecteur de proximité, ou par un câble dont un bout est apposé magnétiquement à une paroi d'une cassette contenant l'électronique du poste d'appâtage près du détecteur de proximité et l'autre bout est relié à la porte d'accès du poste d'appâtage, la porte se refermant automatiquement après le passage de l'animal entraînant une traction sur le câble et le détachement de l'autre bout de celui-ci de la cassette ayant pour effet le déclenchement du détecteur de proximité.

11. Système selon n'importe laquelle des revendications précédentes comportant au moins une carte SIM dans le poste d'appâtage et soit une carte SIM localisée chez le serveur, soit un numéro d'appel virtuel ou une carte SIM dans un modem connecté au serveur.

12. Système selon n'importe laquelle des revendications précédentes, ledit poste d'appâtage comportant en outre une plate-forme de butée (21) devant au moins une entrée (29) du poste d'appâtage (1), permettant l'accès du nuisible dans le tunnel, lorsque le poste d'appâtage est placé contre le coin (20) d'une pièce.

13. Système selon la revendication 12 dans lequel l'élément de mémoire est une carte SIM.

14. Système selon la revendication 6 et/ou 10 dans laquelle la partie électronique du poste d'appâtage ainsi que le détecteur de proximité sont logés à l'intérieur d'une cassette (26) qui reste autonome de la partie mécanique et permet un changement rapide, par exemple par un système de glissière vertical.

15. Cassette (26) pour une utilisation dans un système selon la revendication 14, ladite cassette contenant la partie électronique du poste d'appâtage ainsi que le détecteur de proximité.

16. Méthode de contrôle et de gestion d'une pluralité de postes d'appâtage utilisant un système selon n'importe lesquelles des revendications 1-14.

## Patentansprüche

1. System umfassend mindestens eine Köderstation (1) zum Ködern von Tieren, insbesondere von Schädlingen und von Wildtieren, und eine Vorrichtung zum Kontrollieren der besagten mindestens einen Köderstation, wobei die besagte mindestens eine Köderstation mit einem Telekommunikationsmodul zur mobilen, autonomen Telefonie oder einem Modem, sowie mit einer Leiterplatte, die unter anderen einen Speicher und einen Prozessor umfasst, ausgerüstet ist, wobei die Kontrollvorrichtung die Durchführung der folgenden Schritte ermöglicht:
- Schritt zur Detektion eines stattfindenden Ereignisses oder eines Zustandes,
- Schritt zur Übermittlung dieses Zustandes an einen Server (5), durch einen Anruf in Abwesenheit einer vorgegebenen Nummer auf diesen Server,
- Schritt zur Entschlüsselung des Zustandes auf der Ebene des Servers, mit Berücksichtigung der Rufnummer des Kommunikationsmoduls sowie der Telefonnummer des Angerufenen, der mit dem Server verbunden ist, und
- Schritt zur Auslösung eines Warnereignisses aufgrund dessen ein Gegenstand oder eine Person durch den Server kontaktiert wird, vorzugsweise über Telekommunikation, zum Signalisieren des besagten Zustandes oder Ereignisses.

2. System nach dem Anspruch 1, bei dem der Schritt der Detektion dann erfolgt, wenn ein Schädling in die Köderstation (1) eintritt.

3. System nach Anspruch 1 oder 2, bei dem die Rufnummer in Abwesenheit zum Server vom dem besagten Zustand oder Ereignis abhängig ist.

4. System nach Anspruch 1, 2 oder 3, bei dem der Schritt der Detektion dann erfolgt, wenn der Ladezustand der Batterie (33) sich unterhalb eines vorgegebenen Standes befindet.

5. System nach dem Anspruch 1, bei dem der Schritt der Entschlüsselung oder der Interpretation des Anrufes in Abwesenheit auf der Basis der Rufnummer des angerufenen Modems oder einer virtuellen Nummer erfolgt, wobei das Koppeln dieser beiden Nummer den Ursprung des Anrufes, sowie die Art der Warnung angibt, wobei die Art des Anrufes durch die in Abwesenheit angerufenen Nummer angegeben wird.

6. System nach dem Anspruch 1, bei dem die mindestens eine Köderstation (1) mindestens ein Gehäuse aufweist, deren Dimensionen, dem Schädling angepasst sind, und das mit mindestens einer Öffnung (29, 29') und einer Rückschlagklappe (22), die jegliche Kehre des Schädlings durch die besagte mindestens eine Öffnung verhindert, ausgerüstet ist und ein Element zur Ansteuerung eines Näherungssensors (25) umfasst.

7. System nach irgendeinem der vorangehenden Ansprüche, bei dem die Kontrollvorrichtung die Durchführung eines Schrittes ermöglicht, bei dem die infolge der besagten Detektion erfolgende Warnung auf dem Speicherträger der Leiterplatte gespeichert wird.

8. System nach irgendeinem der vorangehenden Ansprüche, bei dem die mindestens eine Köderstation infolge einer Interpretation eines von dem Server stammenden Anrufes in Abwesenheit eine bestimmte Handlung ausführt.

9. System nach irgendeinem der vorangehenden Ansprüche, bei dem der Server eine oder mehrere Personen per E-Mail oder SMS kontaktiert.

10. System nach irgendeinem der vorangehenden Ansprüche, bei dem der Schritt zur Detektion mit Hilfe eines Schalters vom Typ Reed und eines Magnets, oder mit Hilfe eines magnetischen Schalters und eines Magnets, oder mit Hilfe eines Infrarotschalters und einer Wärmequelle, oder durch Öffnen einer Zugangstür zu der oder in der Schädlingsköderstation durch den Schädling, das Element zur Ansteuerung des Näherungssensors, das in der Tür, nah dem Näherungssensors integriert ist, oder durch ein Kabel, dessen ein Ende auf der Wand einer die Elektronik der Köderstation enthaltenden Kassette, neben dem Näherungssensor magnetisch gehalten ist und das andere Ende mit der Zugangstür der Köderstation verbunden ist, wobei die Tür nach dem Eintritt des Tieres automatisch schließt, wodurch das Kabel gezogen und das andere Ende von diesem von der Kassette getrennt wird, mit der Folge, dass der Näherungssensor ausgelöst wird.

11. System nach irgendeinem der vorangehenden Ansprüche, umfassend mindestens eine SIM-Karte in der Köderstation und entweder eine bei dem Server lokalisierte SIM-Karte oder eine virtuelle Rufnummer in Abwesenheit oder eine SIM-Karte in einem mit dem Server verbundenen Modem,

12. System nach irgendeinem der vorangehenden Ansprüche, bei dem die besagte Köderstation außerdem eine Anschlagsplattform (21) umfasst, die sich vor mindestens einem Eingang (29) der Köderstation (1) befindet, der dem Schädling den Zugang zum Tunnel ermöglicht, wenn die Köderstation (1) in einer Ecke (20) eines Raumes platziert ist.

13. System nach dem Anspruch 12, bei dem das Speicherelement eine SIM-Karte ist

14. System nach Anspruch 6 und / oder 10, bei dem die Elektronik der Köderstation, sowie der Näherungssensor im Inneren einer Kassette (26) untergebracht sind, die gegenüber dem mechanischen Teil autonom bleibt und einen rapiden Wechsel beispielsweise mittels eines senkrechten Gleitsystem ermöglicht.

15. Kassette (26), zur Verwendung bei einem System nach dem Anspruch 14, wobei die besagte Kassette das elektronische Teil der Köderstation, sowie den Näherungssensor enthält.

16. Verfahren zum Kontrollieren und zum Betreiben einer Mehrzahl von Köderstationen, bei denen ein System nach irgendeinem der Ansprüche 1 - 14 eingesetzt ist.

## Claims

1. System comprising at least one trap (1) for animals, in particular for pests and wild animals, and a device for monitoring of said at least one trap, said at least one trap being equipped with an autonomous mobile telephony telecommunications module or modem, as well as a printed circuit board, comprising, among others, a memory and a processor, with the device for monitoring making it possible to implement the following steps:
- a step of detection when an event or state occurs;
- a step of communication of this state to a server (5), by means of a unanswered call to this server at a specified number;
- at the server level, a step of decoding the message that includes the call number of the communication module as well as the telephone number of the party called, connected to the server;
- and a step of triggering an alarm event by which an object or an individual is contacted by the server, preferably by telecommunications, so as to signal said state or event.

2. System according to claim 1, in which the detection step takes place when the pest enters the trap (1).

3. System according to claim 1 or 2, in which the number of the unanswered call to the server depends on said state or event.

4. System according to claim 1, 2 or 3, in which the detection step occurs when the charge state of the battery (33) is below a specified level.

5. System according to claim 1, in which the step for decoding or interpreting the unanswered call is based on the call number of the calling modem, and the call number of the called modem, or a virtual number, with the pair of these two numbers indicating the origin of the call, as well as the nature of the alarm, with the nature of the call being indicated by the number called unanswered.

6. System for monitoring a trap against pests according to claim 1, in which the at least one trap (1) comprises at least one box of a size suited to said pest and having at least one opening (29, 29') and a non-return valve (22) that prevents any return of the vermin or pest through said at least one opening and comprising an excitation element of a proximity detector (25).

7. System according to any of the preceding claims, wherein the device for monitoring making it possible a step for recording the alarm following said detection on the memory medium of the printed circuit board.

8. System according to any of the preceding claims in which the at least one trap, following an interpretation of a unanswered call coming from the server, carries out a certain maneuver.

9. System according to any of the preceding claims, in which the server contacts one or more individuals by e-mail or SMS.

10. System according to any of the preceding claims, in which the detection step is carried out using a Reed-type breaker and a magnet, or using a magnetic breaker and a magnet, or using an infrared breaker and a heat source, or by the opening of an access door to or in the trap by the pest, with the excitation element of the proximity detector, integrated in the door, moving near the proximity detector, or by a cable of which one end is affixed magnetically to a wall of the cassette containing electronics of the trap close to the proximity detector and the other end is connected to the access door of the trap, with the door being closed automatically after the animal passes, causing the cable to be pulled and the other end of the latter to be detached from the cassette, having the effect of triggering the proximity detector.

11. System according to any of the preceding claims, comprising at least one SIM card in the trap and one SIM card that is resident on the server, or a virtual call number or a SIM card in a modem connected to the server.

12. System according to any of the preceding claims, the trap comprising further a stop platform (21) that has at least one entry (29) of the trap (1) allowing the vermin or pest access into the tunnel when the trap is placed against the corner (20) of a room.

13. System according to claim 12, in which the memory element is a SIM card.

14. System according to claim 6 and/or 10, in which the electronic part of the trap and the proximity detector are housed inside a cassette (26) that remains independent of the mechanical part and allows a rapid change, for example by a vertical slide system.

15. Cassette (26) for use in a system according to claim 14, said cassette containing the electronic part of the trap as well as the proximity detector.

16. Method for monitoring and managing a number of traps using a system according to any of the claims 1-14.
